# EUROPEAN PATENT APPLICATION

(11) **EP 4 718 246 A1**
(43) Date of publication of application: **01.04.2026**
(21) Application number: 24844360.8
(22) Date of filing: 23.05.2024
(51) Int. Cl.: G06F 9/451

(54) **INFORMATION PROCESSING METHOD AND APPARATUS, AND WEARABLE DEVICE AND STORAGE MEDIUM**

(30) Priority: 26.07.2023 CN 202310924976
(71) Applicant: Meta-Bounds Inc., Zhuhai, Guangdong 519000 (CN)
(72) Inventor: JIANG, Min Hu, Zhuhai, Guangdong 519000 (CN)
(74) Representative: Santarelli
(86) International application number: PCT/CN2024/094981
(87) International publication number: WO 2025/020665

(57) **Abstract**

Provided in the embodiments of the present disclosure are an information processing method and apparatus (400), and a wearable device (100) and a storage medium. The information processing method is applied to a wearable device (100), and comprises: when information to be displayed is received, determining the current operating state of the wearable device (100), and determining an application program corresponding to the information to be displayed; according to the operation state and the application program, determining a processing mode for the information to be displayed; and on the basis of the processing mode, outputting information corresponding to the information to be displayed, and/or storing the information to be displayed.

## Description

### Technical Field

The prevent disclosure relates to the technical field of information processing, and in particular, relates to an information processing method and apparatus, a wearable device and a storage medium.

### Background of the Invention

With the development of technology, wearable devices are becoming increasingly popular among users. Wearable devices include Augmented Reality (AR) glasses, Virtual Reality (VR) glasses and AR helmets or the like. The field of view (FOV) of wearable devices currently available is relatively small, and the content that can be displayed in the entire field of vision is limited, which is not particularly convenient for interaction. Moreover, the characteristic of wearable devices being worn on eyes of users inevitably makes it difficult for users to directly contact them physically for interaction. Therefore, when information that needs to be displayed is received by the wearable devices, how to display the information is an urgent problem to be solved.

### Summary of the Invention

An embodiment of the present disclosure provides an information processing method and apparatus, a wearable device and a storage medium, which aim to improve the intelligence of information displaying by the wearable device.

In a first aspect, an embodiment of the present disclosure provides an information processing method, in which the information processing method is applied to a wearable device, and the method includes:
when information to be displayed is received, determining the current operating state of the wearable device, and determining an application program corresponding to the information to be displayed;
determining a processing mode for the information to be displayed according to the operation state and the application program; and
on the basis of the processing mode, outputting information corresponding to the information to be displayed, and/or storing the information to be displayed.

In a second aspect, an embodiment of the present disclosure further provides an information processing apparatus, in which the information processing apparatus is applied to a wearable device, and the information processing apparatus includes:
a first determining module, being configured to determine the current operating state of the wearable device and determine an application program corresponding to information to be displayed after the information to be displayed is received;
a second determining module, being configured to determine a processing mode for the information to be displayed according to the operation state and the application program; and
a processing module, being configured to output information corresponding to the information to be displayed and/or store the information to be displayed on the basis of the processing mode.

In a third aspect, an embodiment of the present disclosure further provides a wearable device, which includes a processor, a memory, a computer program stored in the memory and executable by the processor, and a data bus for realizing connection and communication between the processor and the memory, in which when executed by the processor, the computer program implements the following steps:
when information to be displayed is received, determining the current operating state of the wearable device, and determining an application program corresponding to the information to be displayed;
determining a processing mode for the information to be displayed according to the operation state and the application program; and
on the basis of the processing mode, outputting information corresponding to the information to be displayed, and/or storing the information to be displayed.

In a fourth aspect, an embodiment of the present disclosure further provides a storage medium for computer-readable storage, in which the storage medium stores one or more programs, and the one or more programs are executable by one or more processors to implement the following steps:
when information to be displayed is received, determining the current operating state of the wearable device, and determining an application program corresponding to the information to be displayed;
determining a processing mode for the information to be displayed according to the operation state and the application program; and
on the basis of the processing mode, outputting information corresponding to the information to be displayed, and/or storing the information to be displayed.

The embodiment of the present disclosure provides an information processing method and apparatus, a wearable device and a storage medium. After receiving display information, the wearable device determines a processing mode for the information to be displayed according to the current operating state of the wearable device and the application program corresponding to the information to be displayed, and then outputs information corresponding to the information to be displayed and/or stores the information to be displayed based on the determined processing mode. In this way, after information that needs to be displayed is received by the wearable device, whether or not to display the received information and how to display the received information are decided according to the current operating state and the application program corresponding to the received information, therefore improving intelligence when a wearable device receives information to be displayed and then displays same.

### Brief Description of the Drawings

In order to more clearly explain technical solutions of embodiments of the present disclosure, attached drawings required in the description of the embodiments will be briefly introduced hereinafter. Obviously, the attached drawings in the following description are some embodiments of the present disclosure, and other drawings can be obtained according to these attached drawings by those of ordinary skill in the art without making creative efforts.
FIG. 1 is a schematic block diagram illustrating the structure of a wearable device provided according to an embodiment of the present disclosure.
FIG. 2 is a schematic flowchart diagram of an information processing method provided according to an embodiment of the present disclosure.
FIG. 3 is a schematic flowchart diagram of another information processing method provided according to an embodiment of the present disclosure.
FIG. 4 is a schematic flowchart diagram of automatically deleting notification messages by AR glasses in an embodiment of the present disclosure.
FIG. 5 is a schematic flowchart diagram of automatically deleting, by AR glasses, notification messages sent by a mobile phone in an embodiment of the present disclosure.
FIG. 6 is a schematic block diagram illustrating the structure of an information processing apparatus provided according to an embodiment of the present disclosure.

### Detailed Description of Embodiments

Hereinafter, technical solutions in the embodiments of the present disclosure will be described clearly and completely with reference to the attached drawings in the embodiments of the present disclosure. Obviously, the embodiments described herein are a part of but not all of the embodiments of the present disclosure. All other embodiments that can be obtained by those of ordinary skill in the art from the embodiments of the present disclosure without making creative efforts shall fall within the scope of the present disclosure.

The flowchart diagrams shown in the attached drawings are for illustration, so it is not necessary to include all the contents and operations/steps, and it is not necessary to execute the operations/steps in the order described. For example, some operations/steps can be decomposed, combined or partially merged, so the actual execution order may be changed according to the actual situation.

It should be appreciated that the terminology used in the specification of the present disclosure herein is for the purpose of describing specific embodiments and is not intended to limit the present disclosure. As used in the specification and the appended claims of the present disclosure, the singular forms "a", "an" and "the" are intended to include the plural forms unless the context clearly indicates otherwise.

Some embodiments of the present disclosure will be described in detail with reference to the attached drawings. The following embodiments and features in the embodiments can be combined with each other without conflict.

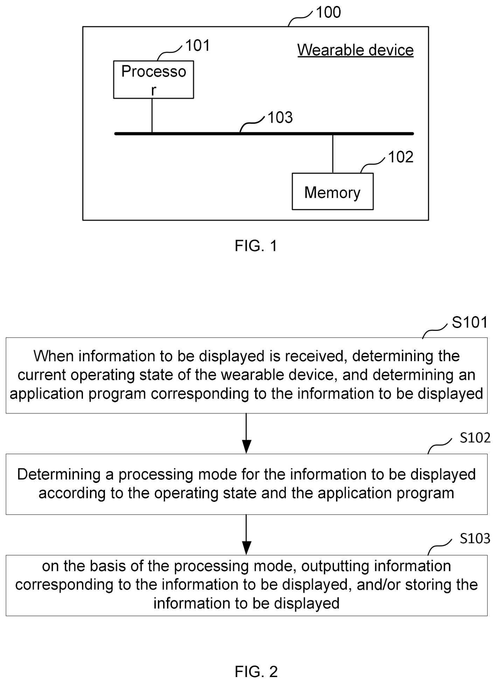

FIG. 1 is a schematic block diagram illustrating the structure of a wearable device provided according to an embodiment of the present disclosure.

As shown in FIG. 1, a wearable device 100 includes a processor 101 and a memory 102, and the processor 101 and the memory 102 are connected by a bus 103, which is for example an Inter-integrated Circuit (I2C) bus.

Specifically, the processor 101 is configured to provide computing and control capabilities to support the operation of the entire wearable device 100. The processor 101 may be a Central Processing Unit (CPU), or the processor 101 may be other general-purpose processors, Digital Signal Processors (DSP), Application Specific Integrated Circuits (ASIC), Field-Programmable Gate Arrays (FPGA) or other programmable logic devices, discrete gates or transistor logic devices, discrete hardware components or the like. Among them, the general-purpose processor may be a microprocessor or the processor may be any conventional processor or the like.

Specifically, the memory 102 may be a Flash chip, a Read-Only Memory (ROM), a disk, an optical disk, a USB flash disk or a mobile hard disk or the like.

As shall be appreciated by those skilled in the art, the structure shown in FIG. 1 is a block diagram of a part of the structure related to the solution of the embodiment of the present disclosure, and does not constitute a limitation on wearable devices to which the solution of the embodiment of the present disclosure is applied. Specific wearable devices may comprise more or less components than those shown in the figure, or combine some components, or have different component arrangements.

The processor 101 is configured to run a computer program stored in the memory 102, and implement any one of the information processing methods provided according to the embodiments of the present disclosure when executing the computer program.

In an embodiment, the processor is configured to run a computer program stored in the memory, and implement the following steps when executing the computer program:
when information to be displayed is received, determining the current operating state of the wearable device, and determining an application program corresponding to the information to be displayed;
determining a processing mode for the information to be displayed according to the operation state and the application program; and
on the basis of the processing mode, outputting information corresponding to the information to be displayed, and/or storing the information to be displayed.

In an embodiment, the operation of determining a processing mode for the information to be displayed according to the operation state and the application program includes:
determining the type to which the application program belongs, and determining the processing mode for the information to be displayed according to the type to which the application program belongs and the operation state, in which under the same operation state, when the type to which the application program belongs is different, the processing mode for the information to be displayed is different.

In an embodiment, the operation of determining a processing mode for the information to be displayed according to the operation state and the application program includes:
if the operation state is a screen-on state and the application program is a first-type program, then determining the processing mode for the information to be displayed as a first mode, in which the first mode is to display the information to be displayed, output prompt information corresponding to the information to be displayed and store the information to be displayed in a preset information list;
if the operation state is a screen-on state and the application program is a second-type program, then determining the processing mode for the information to be displayed as a second mode, in which the second mode is to display the target information of the information to be displayed.

In an embodiment, the operation of determining a processing mode for the information to be displayed according to the operation state and the application program includes:
if the operation state is a screen-off state and the application program is a third-type program, then determining the processing mode for the information to be displayed as a third mode, in which the third mode is to display the information to be displayed and output prompt information corresponding to the information to be displayed;
if the operation state is a screen-off state and the application program is a fourth-type program, then determining the processing mode for the information to be displayed as a fourth mode, in which the fourth mode is to store the information to be displayed in a preset information list.

In an embodiment, the information to be displayed is stored in a preset information list, and after the operation of storing the information to be displayed on the basis of the processing mode, the method further includes:
if a plurality of pieces of information are stored in a preset information list, and it is detected that the eye gaze point of a user is located within a target display area of the wearable device, then detecting whether a swiping instruction is received;
if a swiping instruction is received, then scrolling the preset information list according to the swiping instruction to display other information in the preset information list.

In an embodiment, the swiping instruction is triggered when head movement of the user is detected by the wearable device, or the swiping instruction is sent to the wearable device by a remote control device.

In an embodiment, after the operation of outputting information corresponding to the information to be displayed and/or storing the information to be displayed on the basis of the processing mode, the method further includes:
detecting whether the information to be displayed meets a preset deletion condition; and
if the information to be displayed meets the preset deletion condition, then deleting the information to be displayed.

In an embodiment, the operation of detecting whether the information to be displayed meets a preset deletion condition includes:
when the information to be displayed is in a completely displayed state for the first time, determining whether a control instruction for controlling the information to be displayed is received;
if the control instruction is received and then the information to be displayed is in a hidden state, then determining the number of times that the information to be displayed is in a hidden state; and
if the number of times that the information to be displayed is in a hidden state meets the preset condition, then determining that the information to be displayed meets the deletion condition.

In an embodiment, if the information to be displayed is sent by a terminal device connected to the wearable device, then after the operation of outputting information corresponding to the information to be displayed and/or storing the information to be displayed on the basis of the processing mode, the method further includes:
after receiving a deletion notification message sent by the terminal device, determining information to be deleted in the wearable device corresponding to the terminal device, in which the deletion notification message is generated after the terminal device deletes the information to be displayed; and
deleting the information to be deleted.

It should be noted that, as shall be clearly appreciated by those skilled in the art, for the convenience and conciseness of description, reference may be made to the corresponding process in the embodiment of the information processing method described below for the specific working process of the wearable device described above, and this will not be further described herein.

Hereinafter, the information processing method provided according to the embodiment of the present disclosure will be introduced in detail in combination with the wearable device in FIG. 1. It should be noted that the wearable device in FIG. 1 is used to explain the information processing method provided according to the embodiment of the present disclosure, and it does not constitute limitation on the application scenario of the information processing method provided according to the embodiment of the present disclosure. In this embodiment, the wearable device may be AR glasses, VR glasses, AR helmets, wristbands, or the like.

Referring to FIG. 2, there is shown a schematic flowchart diagram of an information processing method provided according to an embodiment of the present disclosure.

As shown in FIG. 2, the information processing method includes steps S101 to S103.

Step S101: when information to be displayed is received, determining the current operating state of the wearable device, and determining an application program corresponding to the information to be displayed.

When information to be displayed is received by the wearable device, the wearable device determines the current operating state of the wearable device and determines an application program corresponding to the received information to be displayed. The information to be displayed may be information sent to the wearable device by a terminal device or information sent by other wearable devices, in which the terminal device includes but not limited to mobile phones, personal digital assistants and personal computers. The operation state for the wearable device includes a power-off state and a power-on state, in which the power-on state includes a screen-off state and a screen-on state. The wearable device can determine the application program corresponding to the information to be displayed according to the identification information of the application program carried in the information to be displayed, the identification information is used for distinguishing different application programs, the identification information corresponding to different application programs is different, and the types of the identification information are not specifically limited by the embodiment of the present disclosure. For example, the information to be displayed may be short message information, then the application program corresponding to the information to be displayed is short message application; and if the information to be displayed is WeChat information, then the application program corresponding to the information to be displayed is WeChat application. The application program corresponding to the information to be displayed may be an application program in the wearable device, or it may be an application program in the terminal device connected to the wearable device.

Step S102, determining a processing mode for the information to be displayed according to the operation state and the application program.

After the wearable device determines the current operating state of the wearable device and the application program corresponding to the information to be displayed, the wearable device determines the processing mode for the information to be displayed according to the operation state and the application program corresponding to the information to be displayed. Under the same operation state, the processing mode for information to be displayed corresponding to different application programs may be the same or different; and under different operation states, the processing mode for the information to be displayed corresponding to the same application program may be the same or different. The processing mode for the information to be displayed includes at least one of the following: the wearable device displaying the information corresponding to the information to be displayed, the wearable device storing the information to be displayed in a preset information list, and the wearable device outputting prompt information which prompts the user that information to be displayed is received. The screen of the wearable device may be a virtual screen. For example, when the wearable device is AR glasses, the screen of the wearable device is the virtual screen corresponding to the AR glasses.

In an embodiment, step S102 includes: determining the type to which the application program belongs, and determining the processing mode for the information to be displayed according to the type to which the application program belongs and the operation state, in which under the same operation state, when the type to which the application program belongs is different, the processing mode for the information to be displayed is different.

As for the determination of the type to which the application program belongs, the categories to which respective application programs belong may be set in advance. That is, users can classify the application programs in the wearable device according to their needs. After receiving the information to be displayed, the wearable device can know the application program corresponding to the information to be displayed simply by extracting the application identification in the information to be displayed, and then it can know the type to which the application program belongs after knowing the application program corresponding to the information to be displayed. Each type may encompass multiple application programs, and what each type of application programs are specifically used for is not limited in the embodiment of the present disclosure. After the type to which the application program belongs is determined, the wearable device determines the processing mode for the information to be displayed according to the type to which the application program belongs and the current operating state of the wearable device, in which under the same operation state, when the type to which the application program belongs is different, the processing mode for the information to be displayed is different.

Step S103: on the basis of the processing mode, outputting information corresponding to the information to be displayed, and/or storing the information to be displayed.

After determining the processing mode for the information to be displayed, the wearable device outputs the information corresponding to the information to be displayed and/or stores the information to be displayed based on the processing mode. The information corresponding to the information to be displayed includes at least one of the following: target information corresponding to the information to be displayed, prompt information corresponding to the information to be displayed, and content of the information to be displayed. The target information is icons and titles or the like corresponding to the information to be displayed, that is, the target information is a part of the information to be displayed; the content of the information to be displayed is all information included in the information to be displayed, such as icons, titles and text contents, and the text contents may be words, pictures and/or videos or the like. As shall be appreciated, displaying the information to be displayed as described in the embodiment of the present disclosure is to display the content of the information to be displayed, so that all information included in the information to be displayed is in a visible state for the user. If the content included in the information to be displayed is too much to be completely displayed in one display page, then in a certain embodiment, it may be considered that the wearable device has displayed the content of the information to be displayed provided that the user can view the remainder of the information to be displayed by the operation of switching the display page.

If the information to be displayed is a message sent by an application A, then the content of the information to be displayed includes the icon of the application A, the content of the message, and the title of the message (if any) or the like. As shall be appreciated, the icon corresponding to the information to be displayed is the icon of the application program corresponding to the information to be displayed, and the application program corresponding to the information to be displayed can be identified by the icon.

After receiving the display information, the wearable device in this embodiment determines the processing mode for the information to be displayed according to the current operating state of the wearable device and the application program corresponding to the information to be displayed, and then outputs the information corresponding to the information to be displayed and/or stores the information to be displayed based on the determined processing mode. In this way, after receiving information that needs to be displayed, the wearable device decides whether to display the received information and how to display the received information according to the current operating state and the application program corresponding to the received information, therefore improving intelligence when the wearable device receives information to be displayed and then displays same.

In an embodiment, the step S102 includes:
step a, if the operation state is a screen-on state and the application program is a first-type program, then determining the processing mode for the information to be displayed as a first mode, in which the first mode is to display the content of the information to be displayed, output prompt information corresponding to the information to be displayed and store the information to be displayed in a preset information list.

If the operation state of the wearable device is a screen-on state, and the application program corresponding to the information to be displayed is the first-type program, then the wearable device determines the processing mode for the information to be displayed as a first mode. The first mode is to display the content of the information to be displayed, output prompt information corresponding to the information to be displayed and store the information to be displayed in a preset information list. The wearable device may display the content of the information to be displayed through a banner pop-up window or display the content of the information to be displayed in other ways. When the wearable device outputs the prompt information, the prompt information may be output in the form of audio or indicator light or the like. For example, the prompt information is a notification sound of "ding". The preset information list may be an information list of application programs corresponding to the information to be displayed, an information list corresponding to the first-type programs, or an information list corresponding to terminal device connected to the wearable device.

In an embodiment, the preset information list may be divide into two columns, one column is used for storing information to be displayed directly received by the wearable device, such as information sent by other wearable devices, and/or some notification information generated by the wearable device itself, and the other column is used for storing information sent by other terminal devices. That is, one column is used for storing information sent by the same type of devices and/or notification information generated by the wearable device, and the other column is used for storing information sent by different types of devices. For example, when the wearable device is a glasses device and the terminal device is a mobile phone, one column of the preset information list is used to store glasses notifications, which may be a low battery reminder, calendar notification, alarm clock information, etc., and the other column is used to store mobile phone notifications which refer to the notification information transmitted to glasses by the mobile phone through Bluetooth or WiFi or the like.

Step b, if the operation state is a screen-on state and the application program is a second-type program, then determining the processing mode for the information to be displayed as a second mode, in which the second mode is to display the target information of the information to be displayed.

If the operation state is a screen-on state and the application program is a second-type program, then the processing mode for the information to be displayed is determined as a second mode, in which the second mode is to display the target information of the information to be displayed, and the way in which the target information is displayed may be the same as or different from that in which the content of the information to be displayed is displayed. The second-type program is different from the first-type program. As shall be appreciated, when the wearable device is in the screen-on state, as compared to the second mode, the notification method for the first mode is strong notification, while the notification method for the second mode is weak notification, and the power consumption of the notification method for the first mode is greater than that of the notification method for the second mode. In another embodiment, the second mode may also involve displaying the target information of the information to be displayed and storing the information to be displayed in a preset information list, and the second mode will not output the prompt information corresponding to the information to be displayed which is used to remind the user of the wearable device that information to be displayed is received.

In an embodiment, the step S102 includes:
Step c, if the operation state is a screen-off state and the application program is a third-type program, then determining the processing mode for the information to be displayed as a third mode, in which the third mode is to display the content of the information to be displayed and output prompt information corresponding to the information to be displayed.

If the operation state of the wearable device is a screen-off state and the application program is a third-type program, then the wearable device determines the processing mode for the information to be displayed as a third mode. The third-type program may be the same as or different from the first-type program. The third mode is to display the content of the information to be displayed and output the prompt information corresponding to the information to be displayed.

In another embodiment, the third mode may be the same as the first mode.

Step d, if the operation state is a screen-off state and the application program is a fourth-type program, then determining the processing mode for the information to be displayed as a fourth mode, in which the fourth mode is to store the information to be displayed in a preset information list.

If the operation state of the wearable device is a screen-off state and the application program is a fourth-type program, then the wearable device determines the processing mode for the information to be displayed as a fourth mode. The fourth-type program may be the same as or different from the second-type program. As shall be appreciated, the fourth-type program is different from the third-type program, that is, there is no intersection between the fourth-type program and the third-type program. The fourth mode is to store the information to be displayed in a preset information list. As shall be appreciated, when the wearable device is in the screen-off state, as compared to the fourth mode, the notification method for the third mode is strong notification, while the notification method for the fourth mode is weak notification, and the power consumption of the notification method for the third mode is greater than that of the notification method for the fourth mode.

In this embodiment, different processing mode are set for the received information to be displayed according to different operation states of the wearable device and different application programs, therefore improving the battery endurance of the wearable device on the basis of improving the intelligence of information displaying of the wearable device.

In another embodiment, the information to be displayed is stored in a preset information list, and after the step of storing the information to be displayed on the basis of the processing mode, the method further includes:
if a plurality of pieces of information are stored in a preset information list, and it is detected that the eye gaze point of a user is located within a target display area of the wearable device, then detecting whether a swiping instruction is received;
if a swiping instruction is received, then scrolling the preset information list according to the swiping instruction to display other information in the preset information list.

After receiving the information to be displayed, the wearable device may store the information to be displayed in a preset information list regardless of whether the user has checked the information to be displayed. Therefore, within the same time period, there may be multiple pieces of information stored in the preset information list, in which the preset information list may display the information from front to back according to the chronological order of receiving the information to be displayed, that is, the smaller the time difference between the receiving time of the information to be displayed and the current time, the more forward its display position will be in the preset information list. When multiple pieces of information are stored in the preset information list, if the user needs to check other information in the preset information list, the user may not be able to view all the information stored in the preset information list at one time due to the limitation of the screen of the wearable device. At this time, the wearable device needs to detect whether the eye gaze point of the user is located in the target display area of the wearable device. Reference may be made to the related technology for the scheme of identifying the eye gaze point of the user, and this will not be further described herein. The target display area of the wearable device may be the middle area of the screen corresponding to the wearable device or the area where the preset information list is located. No specific limitation is made to the area of the target display area by this embodiment. If it is detected by the wearable device that the eye gaze point of the user is located in the target display area, then the wearable device detects whether the swiping instruction is received. If the swiping instruction is received, then the wearable device scrolls the preset information list according to the swiping instruction to display other information in the preset information list.

The swiping instruction is triggered when head movement of the user is detected by the wearable device, or the swiping instruction is sent to the wearable device by a remote control device, and the remote control device may be a finger clip, a wristband, a mobile phone or other devices connected to the wearable device. The head movement may be a preset specific head posture, such as the head moving upward for a certain distance, or the head moving downward for a certain distance or the like. When the wearable device scrolls the preset information list according to the swiping instruction, the scrolling distance is positively related to the swiping distance corresponding to the swiping instruction. For example, a swiping instruction may be positioned from the first information in the preset information list to the third information in the preset information list. At this point, the content displayed on the screen of the wearable device scrolls from the first information to the third information in the preset information list so that the user can check the specific content of the third information in the preset information list, or the swiping instruction may be positioned from the first information in the preset information list to the seventh information in the preset information list so that the user can check the specific content of the seventh information in the preset information list.

In this embodiment, when the eye gaze point of the user is located in the target display area of the wearable device and the swiping instruction is received, the preset information list is scrolled according to the swiping instruction, so that the user can check other information stored in the preset information list of the wearable device conveniently, and the convenience of checking information stored in the wearable device by the user is improved.

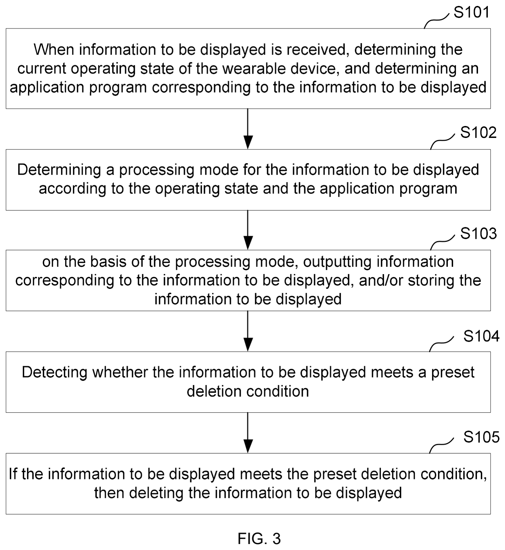

Referring to FIG. 3, in an embodiment, after Step103, the method further includes:
Step S104, detecting whether the information to be displayed meets a preset deletion condition; and
Step S105, if the information to be displayed meets the preset deletion condition, then deleting the information to be displayed.

After the wearable device outputs the information corresponding to the information to be displayed and/or stores the information to be displayed, the wearable device detects whether the information to be displayed meets the preset deletion condition. **If** the information to be displayed meets the preset deletion condition, then the wearable device deletes the information to be displayed; and if the information to be displayed does not meet the preset deletion condition, then the wearable device does not delete the information to be displayed. As shall be appreciated, when the information to be displayed is received by the wearable device, the information to be displayed is saved in the wearable device, and the expression of "storing the information to be displayed" here means storing the information to be displayed in a preset information list. The preset deletion condition may be set according to specific needs.

In another embodiment, the operation of detecting whether the information to be displayed meets a preset deletion condition includes:
when the information to be displayed is in a completely displayed state for the first time, determining whether a control instruction for controlling the information to be displayed is received;
if the control command is received and then the information to be displayed is in a hidden state, then determining the number of times that the information to be displayed is in a hidden state; and
if the number of times that the information to be displayed is in a hidden state meets the preset condition, then determining that the information to be displayed meets the deletion condition.

After the wearable device outputs the information corresponding to the information to be displayed and/or stores the information to be displayed, the wearable device determines whether the information to be displayed is in a completely displayed state for the first time. The completely displayed state indicates that all the contents of the information to be displayed have been displayed on the screen of the wearable device, and the user can check all the contents of the information to be displayed at this time. In an embodiment, the information to be displayed being in a completely displayed state means that the user has finished checking all the contents of the information to be displayed. In another embodiment, the information to be displayed being in a completely displayed state means that all the contents of the information to be displayed are available to be checked by the user, regardless of whether the user has finished checking it.

When it is determined that the information to be displayed is in a completely displayed state for the first time, it is determined whether a control instruction for controlling the information to be displayed is received. The control instruction may be sent by a remote control device connected with the wearable device, triggered by the wearable device when a specific operation gesture and/or eye movement data of the user is detected, or triggered by the user through manipulating a touch component on the wearable device. In a certain embodiment, it may be defined that the control instruction is sent by a remote control device connected with the wearable device, so as to ensure that the user manipulates the remote control device to control the information to be displayed, i.e., to ensure that the user has seen the information to be displayed and avoid deleting the information to be displayed by mistake. The control instruction may be a moving instruction to move the information to be displayed, a checking instruction to check the information to be displayed, or a forwarding instruction to forward the information to be displayed or the like.

If the control instruction is received by the wearable device, then the wearable device determines whether the information to be displayed is in a hidden state. When the information to be displayed is in a hidden state, the user cannot see the information to be displayed on the current display page of the screen of the wearable device. For example, when the user switches to a video playing interface after checking the information to be displayed on the screen of the wearable device, the user cannot see the information to be displayed in the video playing interface, and at this time, the information to be displayed is in a hidden state.

When it is detected by the wearable device that the information to be displayed was once in a hidden state, the wearable device determines the number of times that the information to be displayed is in a hidden state, and determines whether the number of times that the information to be displayed is in the hidden state meets a preset condition. The preset condition may be set according to specific needs. For example, the preset condition may be set as follows: when the number of times that the information to be displayed is in the hidden state is greater than or equal to 2, it is determined that the number of times the information to be displayed in the hidden state meets the preset condition; and when the number of times that the information to be displayed is in the hidden state is less than 2, it is determined that the number of times the information to be displayed in the hidden state does not meet the preset condition. Alternatively, the preset condition may be set as follows: when the number of times that the information to be displayed is in the hidden state is greater than 4, it is determined that the number of times the information to be displayed in the hidden state meets the preset condition; and when the number of times that the information to be displayed is in the hidden state is less than or equal to 4, it is determined that the number of times the information to be displayed in the hidden state does not meet the preset condition. The number of times that the information to be displayed is in a hidden state should include the first time the information to be displayed is in the completely displayed state.

When the number of times that the information to be displayed is in the hidden state meets the preset condition, it is determined that the information to be displayed meets the deletion condition; and when the number of times that the information to be displayed is in the hidden state does not meet the preset condition, it is determined that the information to be displayed does not meet the deletion condition.

For example, when the number of times that the information to be displayed is in the hidden state is greater than or equal to 2, and it is determined that the number of times that the information to be displayed is in the hidden state meets the preset condition, it indicates that if the stored information to be displayed is to be automatically deleted, then the information to be displayed needs to go through the following five operations: (1) all the contents corresponding to the information to be displayed are displayed, that is, the user can see all the contents of the information to be displayed, that is, the information to be displayed is in the completely displayed state for the first time; (2) the user sends a control instruction to control the information to be displayed through the remote control device connected with the wearable device, for example, the user sends a checking instruction to check all the contents of the information to be displayed through a ring connected with AR glasses; (3) the information to be displayed is in the hidden state for the first time, that is, the user switches the current display interface of the wearable device through the remote control device or gestures or other operations, or stores the information to be displayed, so that the information to be displayed is invisible to the user at the current moment; (4) the information to be displayed is in a completely displayed state for the second time; (5) the information to be displayed is in the hidden state for the second time. As shall be appreciated, the information to be displayed is in the hidden state once between every two adjacent times when it is in the completely displayed state.

In this embodiment, when the information to be displayed meets the preset deletion condition, the information to be displayed is automatically deleted, which prevents the information to be displayed from occupying too much storage space of the wearable device and improves the utilization rate of the storage space of the wearable device. Furthermore, after the information to be displayed is in the completely displayed state and a control instruction for controlling the information to be displayed is received, will it be further considered whether to automatically delete the information to be displayed, thus avoiding the deletion of the information to be displayed by mistake, ensuring that the information to be displayed is automatically deleted after it has been checked by the user, and improving the accuracy of the information deletion operation.

In another embodiment, in the case where the information to be displayed is sent by a terminal device connected to the wearable device, after the user sends the information to be displayed in the terminal device to the wearable device and the information to be displayed has been checked in the terminal device, in order to prevent the wearable device from still storing the information to be displayed and thus wasting the storage space of the wearable device, the method further includes:
after receiving a deletion notification message sent by the terminal device, determining information to be deleted in the wearable device corresponding to the terminal device, in which the deletion notification message is generated after the terminal device deletes the information to be displayed; and
deleting the information to be deleted.

After receiving the information to be displayed sent by the terminal device, the wearable device will determine regularly or in real time whether a deletion notification message sent by the terminal device is received. The deletion notification message is used to instruct the wearable device to delete the corresponding information. After the user deletes the information to be displayed, the terminal device will generate a deletion notification message and send the deletion notification message to the wearable device. The deletion notification message carries a message identifier, which is used to uniquely identify and distinguish a piece of information. The wearable device can determine which message needs to be deleted according to the message identifier, that is, the wearable device determines the information to be deleted according to the deletion notification message. In another embodiment, the deletion notification message may also carry the device identifier of the terminal device, so that the wearable device can determine the terminal device to which the information to be deleted belongs according to the device identifier in the deletion notification message.

After receiving the deletion notification message sent by the terminal device, the wearable device determines the target information list corresponding to the deletion notification message. The wearable device stores the information sent by different devices separately, and each device has a corresponding information list, which records all the information sent by the terminal device that has not been deleted yet. As shall be appreciated that, the wearable device can determine the corresponding target information list according to the device identifier carried in the deletion notification message. After determining the target information list, the wearable device deletes the information to be deleted in the target information list according to the message identifier carried in the deletion notification message.

In another embodiment, both the wearable device and the terminal device belong to the same user, which prevents other users from having the permission to delete information of the information owner, who is the receiver or sender of the information. Therefore, after the deletion notification message sent by the terminal device is received by the wearable device, it is determined whether the user of the terminal device and the user of the wearable device are the same user. For example, the wearable device may obtain the user information of the terminal device user, record the user information of the terminal device user as the second user information, and record its user information as the first user information, that is, record the user information of the wearable device as the first user information. User information is information that distinguishes different users, such as telephone numbers, **ID** numbers or the like.

The wearable device determines whether the first user information and the second user information are the same. If the first user information is the same as the second user information, then the wearable device automatically deletes the information to be deleted; and if the first user information is different from the second user information, then the wearable device does not delete the information to be deleted.

In an embodiment, if the wearable device obtains the user information of the terminal device user, then the wearable device may determine whether the user information has the deletion permission to delete the information stored in the wearable device, and if the user information has the deletion permission, then the wearable device deletes the information to be deleted. **If** the user information does not have the deletion permission, then the wearable device does not delete the information to be deleted. Which users possess the deletion permission has been preconfigured in the wearable device.

In this embodiment, after the terminal device deletes information, the wearable device automatically deletes the corresponding information stored in the wearable device, thereforetherefore saving the storage space of the wearable device.

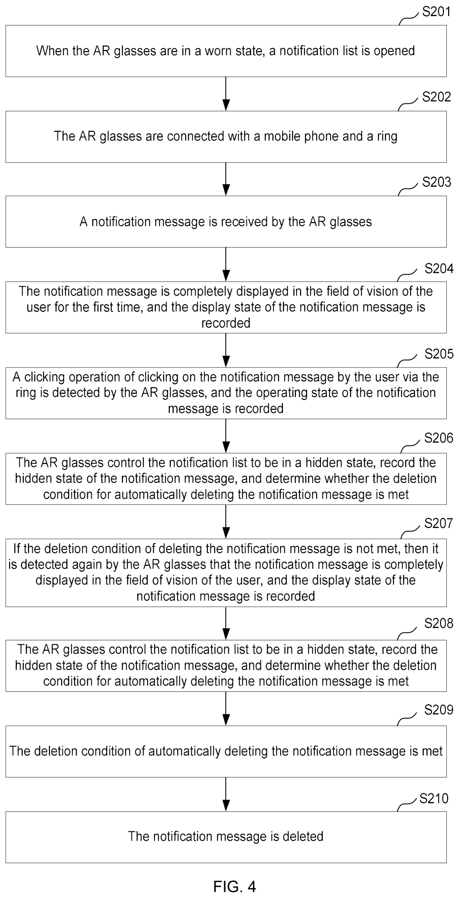

Hereinafter, the process of automatically deleting the notification message by AR glasses in the embodiment of the present application will be illustrated by taking the case where the wearable device is AR glasses, the remote control device is a ring, and the terminal device is a mobile phone as an example. Referring to FIG. 4, as can be known from FIG. 4, the information processing method includes the following steps.

In step S201, when the AR glasses are in a worn state, a notification list (i.e., a preset information list) is opened.

In step S202, the AR glasses are connected with a mobile phone and a ring.

The AR glasses may be connected with the mobile phone and the ring through WiFi or Bluetooth or the like.

In step S203, a notification message is received by the AR glasses.

The notification message is the information to be displayed, which may be sent by the mobile phone to the AR glasses or sent by other AR glasses.

In step S204, the notification message is completely displayed in the field of vision of the user for the first time, and the display state of the notification message is recorded.

The display state may be represented by a display state value. The notification message being completely displayed in the field of vision of the user for the first time indicates that the notification message is in the completely displayed state for the first time, and at this point, the display state value corresponding to the notification message may be recorded as 1, which means that the notification message is in the completely displayed state for the first time. When the display state value is 0, it indicates that the notification message is invisible to the user. That is, for a certain notification message, the default value of its corresponding display state is 0.

In step S205, a clicking operation of clicking on the notification message by the user via the ring is detected by the AR glasses, and the operation state of the notification message is recorded.

The operation state may be represented by the operation state value, and the default value of the operation state value is "false", which indicates that the notification message has not been operated by the ring. When the notification message is clicked for interaction by the user via the ring, the operation state value will be changed to "true". As shall be appreciated, the clicking operation is a control instruction.

In step S206, the AR glasses control the notification list to be in a hidden state, record the hidden state of the notification message, and determine whether the deletion condition for automatically deleting the notification message is met.

The user may trigger an operation instruction to hide the notification list through the operation instruction, so that the notification message is completely invisible to the user. When the notification message is completely invisible to the user, that is, after the notification list is hidden, the AR glasses record the state of the notification message as a hidden state. The notification message needs to go through the following five states in order to meet the deletion condition: (1) it is in the completely displayed state for the first time; (2) the operation state value is true, that is, the user has used the ring to trigger the control instruction for controlling the notification message; (3) it is in the hidden state for the first time; (4) it is in the completely displayed state for the second time; and (5) it is in the hidden state for the second time.

In step S207, if the deletion condition of deleting the notification message is not met, then it is detected again by the AR glasses that the notification message is completely displayed in the field of vision of the user, and the display state of the notification message is recorded.

At this time, the display state value of the notification message is updated to be 2, which indicates that the notification message is in the completely displayed state for the second time.

In step S208, the AR glasses control the notification list to be in a hidden state, record the hidden state of the notification message, and determine whether the deletion condition for automatically deleting the notification message is met.

In step S209, the deletion condition of automatically deleting the notification message is met.

In step S210, the notification message is deleted.

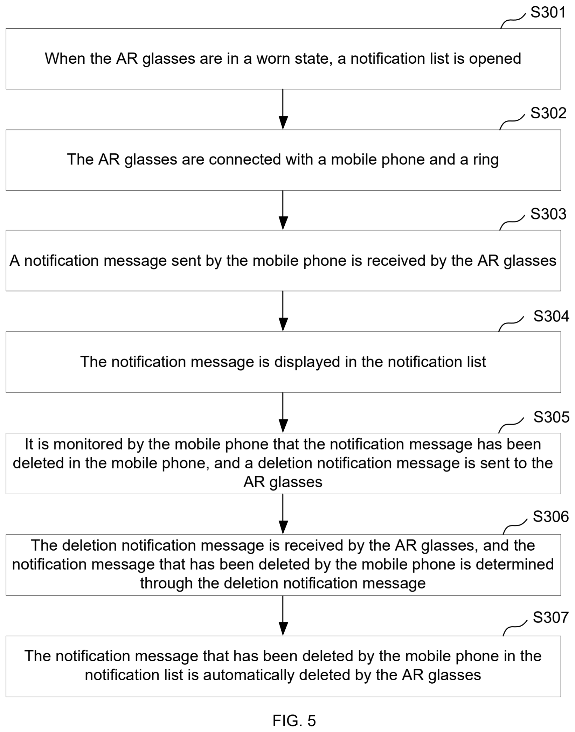

Hereinafter, the process in which the AR glasses automatically delete the notification message sent by a mobile phone in the embodiment of the present application will be illustrated by taking the case where the wearable device is AR glasses, the remote control device is a ring, and the terminal device is a mobile phone as an example. Referring to FIG. 5, as can be known from FIG. 5, the information processing method includes the following steps.

In step S301, when the AR glasses are in a worn state, a notification list is opened.

In step S302, the AR glasses are connected with a mobile phone and a ring.

In step S303, a notification message sent by the mobile phone is received by the AR glasses.

In step S304, the notification message is displayed in the notification list.

In step S305, it is monitored by the mobile phone that the notification message has been deleted in the mobile phone, and a deletion notification message is sent to the AR glasses.

In step S306, the deletion notification message is received by the AR glasses, and the notification message that has been deleted by the mobile phone is determined through the deletion notification message.

In step S307, the notification message that has been deleted by the mobile phone in the notification list is automatically deleted by the AR glasses.

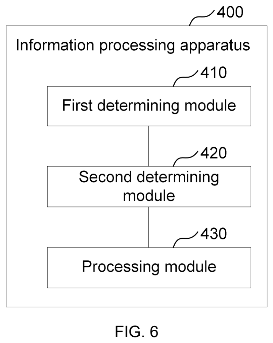

Referring to FIG. 6, there is shown a schematic block diagram illustrating the structure of an information processing apparatus provided according to an embodiment of the present disclosure.

As shown in FIG. 6, the information processing apparatus 400 includes a first determining module 410, a second determining module 420 and a processing module 430, in which:
the first determining module 410 is configured to determine the current operating state of the wearable device and determine an application program corresponding to information to be displayed after the information to be displayed is received;
the second determining module 420 is configured to determine a processing mode for the information to be displayed according to the operation state and the application program; and
the processing module 430 is configured to output information corresponding to the information to be displayed and/or store the information to be displayed on the basis of the processing mode.

In some embodiments, the second determining module 420 is further configured to determine the type to which the application program belongs, and determine the processing mode for the information to be displayed according to the type to which the application program belongs and the operation state, in which under the same operation state, when the type to which the application program belongs is different, the processing mode for the information to be displayed is different.

In some embodiments, the second determining module 420 is further configured to:
if the operation state is a screen-on state and the application program is a first-type program, then determine the processing mode for the information to be displayed as a first mode, in which the first mode is to display the information to be displayed, output prompt information corresponding to the information to be displayed and store the information to be displayed in a preset information list;
if the operation state is a screen-on state and the application program is a second-type program, then determine the processing mode for the information to be displayed as a second mode, in which the second mode is to display the target information of the information to be displayed.

In some embodiments, the second determining module 420 is further configured to:
if the operation state is a screen-off state and the application program is a third-type program, then determine the processing mode for the information to be displayed as a third mode, in which the third mode is to display the information to be displayed and output prompt information corresponding to the information to be displayed; and
if the operation state is a screen-off state and the application program is a fourth-type program, then determine the processing mode for the information to be displayed as a fourth mode, in which the fourth mode is to store the information to be displayed in a preset information list.

In some embodiments, the information to be displayed is stored in a preset information list, and the information processing apparatus further includes:
a first detection module, being configured to detect whether a swiping instruction is received, if a plurality of pieces of information are stored in a preset information list and it is detected that the eye gaze point of a user is located within a target display area of the wearable device; and
a display module, being configured to scroll the preset information list according to the swiping instruction to display other information in the preset information list, if a swiping instruction is received.

In some embodiments, the swiping instruction is triggered when head movement of the user is detected by the wearable device, or the swiping instruction is sent to the wearable device by a remote control device.

In some embodiments, the information processing apparatus further includes:
a second detection module, being configured to detect whether the information to be displayed meets a preset deletion condition; and
a first detection module, being configured to delete the information to be displayed if the information to be displayed meets the preset deletion condition.

In some embodiments, the second detection module includes:
a judging unit, being configured to judge whether a control instruction for controlling the information to be displayed is received when the information to be displayed is in a completely displayed state for the first time;
a determining unit, being configured to determine the number of times that the information to be displayed is in a hidden state if the control command is received and then the information to be displayed is in a hidden state; and determine that the information to be displayed meets the deletion condition if the number of times that the information to be displayed is in the hidden state meets the preset condition.

In some embodiments, if the information to be displayed is sent by a terminal device connected to the wearable device, then the information processing apparatus 400 includes:
a third determining module, being configured to determine information to be deleted in the wearable device corresponding to the terminal device after receiving a deletion notification message sent by the terminal device, in which the deletion notification message is generated after the terminal device deletes the information to be displayed; and
a second deletion module, being configured to delete the information to be deleted.

It shall be noted that, as shall be clearly appreciated by those skilled in the art, for the convenience and conciseness of description, reference may be made to the corresponding process in the embodiment of the information processing method above for the specific working process of the information processing apparatus described above, and this will not be further described herein.

An embodiment of the present disclosure further provides a storage medium for computer-readable storage, in which the storage medium stores one or more programs, and the one or more programs are executable by one or more processors to implement the following steps:
when information to be displayed is received, determining the current operating state of the wearable device, and determining an application program corresponding to the information to be displayed;
determining a processing mode for the information to be displayed according to the operation state and the application program; and
on the basis of the processing mode, outputting information corresponding to the information to be displayed, and/or storing the information to be displayed.

It shall be noted that, as shall be clearly appreciated by those skilled in the art, for the convenience and conciseness of description, reference may be made to the corresponding process in the embodiment of the information processing method above for the specific working process of the storage medium described above, and this will not be further described herein.

The storage medium may be an internal storage unit of the wearable device described in the previous embodiments, such as a hard disk or a memory of the wearable device. The storage medium may also be an external storage device of the wearable device, such as a plug-in hard disk, a Smart Media Card (SMC), a Secure Digital (SD) card, a Flash Card, etc. provided on the wearable device.

As shall be appreciated by those of ordinary skill in the art, all or some of the steps, systems and functional modules/units in the apparatus in the methods disclosed above may be implemented as software, firmware, hardware and appropriate combinations thereof. In the hardware embodiment, the division between functional modules/units mentioned in the above description does not necessarily correspond to the division of physical components. For example, a physical component may have multiple functions, or a function or step may be executed by several physical components in cooperation. Some or all of the physical components may be implemented as software executed by a processor, such as a central processing unit, a digital signal processor or a microprocessor, or implemented as hardware, or implemented as an integrated circuit, such as an application specific integrated circuit. Such software may be distributed on computer-readable media, which may include computer storage media (or non-transitory media) and communication media (or transitory media). As is well known to those of ordinary skill in the art, the term computer storage media include volatile and nonvolatile, removable and non-removable media implemented in any method or technology for storing information, such as computer-readable instructions, data structures, program modules or other data. The computer storage media include, but are not limited to, a RAM, a ROM, a EEPROM, a flash memory or other memory technologies, a CD-ROM, a digital versatile disk (DVD) or other optical disk storages, magnetic boxes, magnetic tapes, magnetic disk storages or other magnetic storage devices, or any other media that may be used to store desired information and may be accessed by a computer. Furthermore, it is well known to those of ordinary skill in the art that communication media usually contain computer-readable instructions, data structures, program modules or other data in modulated data signals such as carrier waves or other transmission mechanisms, and may include any information delivery media.

It shall be appreciated that the term "and/or" used in the specification and the appended claims of the present disclosure refers to any combination and all possible combinations of one or more of the associated listed items, and includes these combinations. It should be noted that terms "including", "comprising" or any other variants thereof used herein are intended to cover non-exclusive inclusion, so that a process, method, article or system including a series of elements includes not those elements, but also other elements not explicitly listed, or elements inherent to such process, method, article or system. Without more restrictions, the element defined by the sentence "including one......" does not exclude the existence of other identical elements in the process, method, article or system that includes the element.

The serial numbers of the above embodiments of the present disclosure are for description and do not represent the advantages and disadvantages of the embodiments. What described above are concrete embodiments of the present disclosure, but the scope claimed in the present disclosure is not limited thereto. Various equivalent modifications or substitutions can be easily conceived by any skilled person familiar with the technical field within the technical scope disclosed in the present disclosure, and all of these modifications or substitutions should be encompassed in the scope claimed in the present disclosure. Therefore, the scope claimed in the present disclosure should be governed by the scope claimed in the claims.

## Claims

1. An information processing method, wherein the information processing method is applied to a wearable device, and the method comprises:
when information to be displayed is received, determining the current operating state of the wearable device, and determining an application program corresponding to the information to be displayed;
determining a processing mode for the information to be displayed according to the operation state and the application program; and
on the basis of the processing mode, outputting information corresponding to the information to be displayed, and/or storing the information to be displayed.

2. The information processing method according to Claim 1, wherein the operation of determining a processing mode for the information to be displayed according to the operation state and the application program comprises:
determining the type to which the application program belongs, and determining the processing mode for the information to be displayed according to the type to which the application program belongs and the operation state, wherein under the same operation state, when the type to which the application program belongs is different, the processing mode for the information to be displayed is different.

3. The information processing method according to Claim 1, wherein the operation of determining a processing mode for the information to be displayed according to the operation state and the application program comprises:
if the operation state is a screen-on state and the application program is a first-type program, then determining the processing mode for the information to be displayed as a first mode, wherein the first mode is to display the information to be displayed, output prompt information corresponding to the information to be displayed and store the information to be displayed in a preset information list; and
if the operation state is a screen-on state and the application program is a second-type program, then determining the processing mode for the information to be displayed as a second mode, wherein the second mode is to display the target information of the information to be displayed.

4. The information processing method according to Claim 1, wherein the operation of determining a processing mode for the information to be displayed according to the operation state and the application program comprises:
if the operation state is a screen-off state and the application program is a third-type program, then determining the processing mode for the information to be displayed as a third mode, wherein the third mode is to display the information to be displayed and output prompt information corresponding to the information to be displayed; and
if the operation state is a screen-off state and the application program is a fourth-type program, then determining the processing mode for the information to be displayed as a fourth mode, wherein the fourth mode is to store the information to be displayed in a preset information list.

5. The information processing method according to Claim 1, wherein the information to be displayed is stored in a preset information list, and after the operation of storing the information to be displayed on the basis of the processing mode, the information processing method further comprises:
if a plurality of pieces of information are stored in a preset information list, and it is detected that the eye gaze point of a user is located within a target display area of the wearable device, then detecting whether a swiping instruction is received; and
if a swiping instruction is received, then scrolling the preset information list according to the swiping instruction to display other information in the preset information list.

6. The information processing method according to Claim 5, wherein the swiping instruction is triggered when head movement of the user is detected by the wearable device, or the swiping instruction is sent to the wearable device by a remote control device.

7. The information processing method according to any of Claims 1 to 4, wherein, after the operation of outputting information corresponding to the information to be displayed and/or storing the information to be displayed on the basis of the processing mode, the method further comprises:
detecting whether the information to be displayed meets a preset deletion condition; and
if the information to be displayed meets the preset deletion condition, then deleting the information to be displayed.

8. The information processing method according to Claim 7, wherein the operation of detecting whether the information to be displayed meets a preset deletion condition comprises:
when the information to be displayed is in a completely displayed state for the first time, determining whether a control instruction for controlling the information to be displayed is received;
if the control instruction is received and then the information to be displayed is in a hidden state, then determining the number of times that the information to be displayed is in a hidden state; and
if the number of times that the information to be displayed is in a hidden state meets a preset condition, then determining that the information to be displayed meets the deletion condition.

9. The information processing method according to any of Claims 1 to 4, wherein if the information to be displayed is sent by a terminal device connected to the wearable device, then after the operation of outputting information corresponding to the information to be displayed and/or storing the information to be displayed on the basis of the processing mode, the method further comprises:
after receiving a deletion notification message sent by the terminal device, determining information to be deleted in the wearable device corresponding to the terminal device,
wherein the deletion notification message is generated after the terminal device deletes the information to be displayed; and
deleting the information to be deleted.

10. An information processing apparatus, wherein the information processing apparatus is applied to a wearable device, and the information processing apparatus comprises:
a first determining module, being configured to determine the current operating state of the wearable device and determine an application program corresponding to information to be displayed after the information to be displayed is received;
a second determining module, being configured to determine a processing mode for the information to be displayed according to the operation state and the application program; and
a processing module, being configured to output information corresponding to the information to be displayed and/or store the information to be displayed on the basis of the processing mode.

11. A wearable device, wherein the wearable device comprises a processor, a memory, a computer program stored in the memory and executable by the processor, and a data bus for realizing connection and communication between the processor and the memory, wherein when executed by the processor, the computer program implements the following steps:
when information to be displayed is received, determining the current operating state of the wearable device, and determining an application program corresponding to the information to be displayed;
determining a processing mode for the information to be displayed according to the operation state and the application program; and
on the basis of the processing mode, outputting information corresponding to the information to be displayed, and/or storing the information to be displayed.

12. The wearable device according to Claim 11, wherein the processor, when implementing the step of determining a processing mode for the information to be displayed according to the operation state and the application program, is configured to implement the following operation:
determining the type to which the application program belongs, and determining the processing mode for the information to be displayed according to the type to which the application program belongs and the operation state, wherein under the same operation state, when the type to which the application program belongs is different, the processing mode for the information to be displayed is different.

13. The wearable device according to Claim 11, wherein the processor, when implementing the step of determining a processing mode for the information to be displayed according to the operation state and the application program, is configured to implement the following operations:
if the operation state is a screen-on state and the application program is a first-type program, then determining the processing mode for the information to be displayed as a first mode, wherein the first mode is to display the information to be displayed, output prompt information corresponding to the information to be displayed and store the information to be displayed in a preset information list; and
if the operation state is a screen-on state and the application program is a second-type program, then determining the processing mode for the information to be displayed as a second mode, wherein the second mode is to display the target information of the information to be displayed.

14. The wearable device according to Claim 11, wherein the processor, when implementing the step of determining a processing mode for the information to be displayed according to the operation state and the application program, is configured to implement the following operations:
if the operation state is a screen-off state and the application program is a third-type program, then determining the processing mode for the information to be displayed as a third mode, wherein the third mode is to display the information to be displayed and output prompt information corresponding to the information to be displayed; and
if the operation state is a screen-off state and the application program is a fourth-type program, then determining the processing mode for the information to be displayed as a fourth mode, wherein the fourth mode is to store the information to be displayed in a preset information list.

15. The wearable device according to Claim 11, wherein the information to be displayed is stored in a preset information list, and the processor, after implementing the step of storing the information to be displayed on the basis of the processing mode, is further configured to implement the following operations:
if a plurality of pieces of information are stored in a preset information list, and it is detected that the eye gaze point of a user is located within a target display area of the wearable device, then detecting whether a swiping instruction is received; and
if a swiping instruction is received, then scrolling the preset information list according to the swiping instruction to display other information in the preset information list.

16. The wearable device according to Claim 15, wherein the processor is further configured to enable:
the swiping instruction to be triggered when head movement of the user is detected by the wearable device, or to be sent to the wearable device by a remote control device.

17. The wearable device according to any of Claims 11 to 15, wherein the processor, after implementing the step of outputting information corresponding to the information to be displayed and/or storing the information to be displayed on the basis of the processing mode, is further configured to implement the following operations:
detecting whether the information to be displayed meets a preset deletion condition; and
if the information to be displayed meets the preset deletion condition, then deleting the information to be displayed.

18. The wearable device according to Claim 17, wherein, the processor, when implementing the operation of detecting whether the information to be displayed meets a preset deletion condition, is configured to implement the following operations:
when the information to be displayed is in a completely displayed state for the first time, determining whether a control instruction for controlling the information to be displayed is received;
if the control instruction is received and then the information to be displayed is in a hidden state, then determining the number of times that the information to be displayed is in a hidden state; and
if the number of times that the information to be displayed is in a hidden state meets the preset condition, then determining that the information to be displayed meets the deletion condition.

19. The wearable device according to any of Claims 11 to 15, wherein if the information to be displayed is sent by a terminal device connected to the wearable device, then the processor, after implementing the step of outputting information corresponding to the information to be displayed and/or storing the information to be displayed on the basis of the processing mode, is further configured to implement the following operations:
after receiving a deletion notification message sent by the terminal device, determining information to be deleted in the wearable device corresponding to the terminal device, wherein the deletion notification message is generated after the terminal device deletes the information to be displayed; and
deleting the information to be deleted.

20. A storage medium for computer-readable storage, wherein the storage medium stores one or more programs, and the one or more programs are executable by one or more processors to implement the following steps:
when information to be displayed is received, determining the current operating state of the wearable device, and determining an application program corresponding to the information to be displayed;
determining a processing mode for the information to be displayed according to the operation state and the application program; and
on the basis of the processing mode, outputting information corresponding to the information to be displayed, and/or storing the information to be displayed.
